# EUROPEAN PATENT APPLICATION

(11) **EP 4 576 369 A1**
(43) Date of publication of application: **25.06.2025**
(21) Application number: 24181781.6
(22) Date of filing: 12.06.2024
(51) Int. Cl.: H01M 50/271, H01M 10/613, H01M 50/262, H01M 10/6567

(54) **CASE AND CELL MODULE HAVING THE SAME**

(30) Priority: 21.12.2023 CN 202323506026 U
(71) Applicant: Sungrow Power Supply Co., Ltd., Hefei, Anhui 230088 (CN)
(72) Inventor: ZHOU, Meng, Hefei, Anhui (CN); SU, Jinguo, Hefei, Anhui (CN); WANG, Hao, Hefei, Anhui (CN)
(74) Representative: Zacco Norway AS

(57) **Abstract**

A case used for storing cells includes a housing (10) and an upper cover (20). The housing (10) is provided with an accommodation chamber (11), a maintenance opening (12) is formed at a top of the housing (10), and the maintenance opening (12) is in communication with the accommodation chamber (11). The accommodation chamber (11) is used for accommodating the cells, and the maintenance opening (12) is arranged corresponding to the cells. The upper cover (20) is detachably arranged on the housing (10) and is able to cover the maintenance opening (12).

## Description

### FIELD

The present application relates to the technical field of cell modules, in particular to a case and a cell module having the case.

### BACKGROUND

A liquid-cooling PACK and a cell module are of an energy-storage structure. In the conventional technology, the liquid-cooling PACK and the cell module each generally include a case cover and a case body. Cells are arranged inside the case body, and the case cover and the case body are integrated by potting, bonding, etc.. However, with such arrangement, the case cover may not be opened anymore, and when the liquid-cooling PACK and the cell module have malfunctions, it is impossible to maintain the cells inside the case body, which makes the cells un-maintainable.

### SUMMARY

A case and a cell module having the case are provided according to the present application, in order to solve the problem in the conventional technology that a liquid-cooling PACK and a cell module are un-maintainable since a case cover and a case body are connected by potting or bonding.

In one aspect of the present application, a case for storing cells is provided, and the case includes a housing and an upper cover, and
the housing has an accommodation chamber, a maintenance opening is formed at a top of the housing, and the maintenance opening is in communication with the accommodation chamber, the accommodation chamber is configured to accommodate the cells, and the maintenance opening is arranged corresponding to the cells; and
the upper cover is detachably arranged on the housing and is configured to cover the maintenance opening.

In one embodiment, a sealant is provided between the housing and the upper cover for forming sealing between the housing and the upper cover.

In another embodiment, a protruding limiter is provided at a top of the housing, a bottom surface of the upper cover abuts against the protruding limiter, and the sealant is provided between the housing and the upper cover.

In another embodiment, a buckle structure is provided between the housing and the upper cover, and the housing is detachably connected to the upper cover by the buckle structure.

In another embodiment, a through hole is formed at the top of the housing, a connecting rod is provided on the upper cover, a protrusion is provided at one end of the connecting rod away from the upper cover, when the upper cover is fixed to the housing, the connecting rod passes through the through hole, the protrusion abuts against an inner wall of the top of the housing, and the buckle structure is formed by cooperation of the through hole and the connecting rod.

In another embodiment, the case further comprises two end covers, which are arranged at both ends of the housing, respectively, and the two end covers are fixedly connected to the housing.

In another embodiment, a potting groove is formed between the ends of the housing and the two end covers, a potting adhesive is potted into the potting groove, and the housing is bonded to the two end covers by the potting adhesive.

In another embodiment, an airtight detection structure is provided on the housing and/or on the upper cover.

In another embodiment, the housing comprises a top plate and two side plates, the two side plates are arranged on both sides of the top plate, respectively, and multiple maintenance openings are provided on the top plate, and multiple buckle structures are arranged between the top plate and the upper cover.

In another embodiment, the multiple maintenance openings are arranged to correspond to welding spots of the cells.

In another aspect of the present application, a cell module is provided, which includes cells, a liquid-cooling plate, and the case as described above, the cells are arranged inside the case, and the case is fixed to the liquid-cooling plate.

By applying the technical solution of the present application, the cells are arranged inside the accommodation chamber of the housing. With the above arrangement, in a normal operation, the upper cover is able to cover the maintenance opening, which prevents the foreign material from coming into the accommodation chamber and prevents the operators from being harmed due to an unintended cell touch. When the cells are damaged and required to be repaired, the operators can detach the upper cover and repair the structures, such as electrode plates of the cells or the communication wires between the cells, through the maintenance openings. With such arrangement, the liquid-cooling PACK and the cell module can have maintainability, which facilitates the repairing of the liquid-cooling PACK and the cell module and thus increases a service life of the liquid-cooling PACK and the cell module and reduces the unnecessary waste.

### BRIEF DESCRIPTION OF THE DRAWINGS

The accompanying drawings that form a part of the present application are used to provide a further explanation to the present application. The illustrative embodiments and their descriptions of the present application are used to explain the present application, which do not constitute an improper limitation to the present application. In figures:
FIG. 1 is an exploded view of a housing in cooperation with an upper cover according to the present application;
FIG.2 is a partially enlarged view of portion A in FIG. 1;
FIG.3 is a structural schematic view of the housing in cooperation with an end cover;
FIG.4 is a structural schematic view of a buckle structure according to the present application;
FIG. 5 is a structural schematic view of the housing in cooperation with the upper cover according to the present application;
FIG. 6 is a structural schematic view of the case according to the present application.

Reference numerals in figures are as follows:

| | | | |
|---|---|---|---|
| 10. | housing; | 11. | accommodation chamber, |
| 12. | maintenance opening; | 13. | protruding limiter; |
| 14. | through hole; | 15. | top plate, |
| 16. | side plate; | 17. | strengthen rib; |
| 18. | potting groove; | 20. | upper cover; |
| 21. | connecting rod; | 22. | protrusion; |
| 23. | reinforcing structure; | 30. | sealant; |
| 40. | end cover; | 50. | airtight detection structure; |
| 60. | pre-tighten structure. | | |

### DETAILED DESCRIPTION OF EMBODIMENTS

The technical solutions in the embodiments of the present utility mode will be described clearly and completely as follows in conjunction with the accompanying drawings in the embodiments of the present utility mode. It is apparent that the described embodiments are only a part of the embodiments according to the present utility mode, rather than all of the embodiments. The description to the at least one embodiment is only illustrative and must not be constituted as limitations to the present application and its application or use. All the other embodiments obtained by those skilled in the art based on the embodiments of the present utility mode without creative work will fall within the scope of the present utility mode.

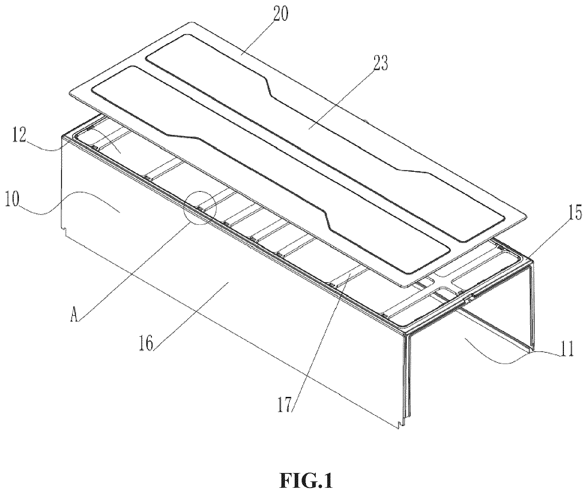

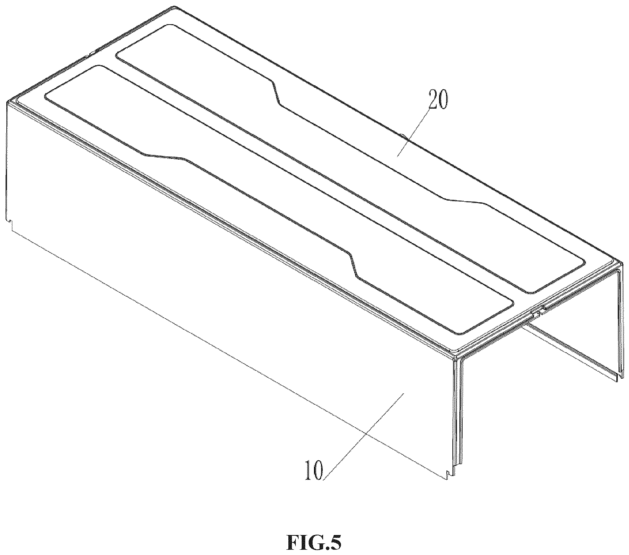

Referring to FIG. 1 to FIG. 6, a case is provided according to the present application. The case is used for storing cells and includes a housing 10 and an upper cover 20. The housing 10 is provided with an accommodation chamber 11, and a maintenance opening 12 is formed at a top of the housing 10. The maintenance opening 12 is in communication with the accommodation chamber 11, and the accommodation chamber 11 is used for accommodating the cells. The maintenance opening 12 is arranged corresponding to the cells. The upper cover 20 is detachably arranged on the housing 10 and is able to cover the maintenance opening 12.

By applying the technical solution of the present application, the cells are arranged inside the accommodation chamber 11 of the housing 10, the maintenance opening 12 is formed at a top of the housing 10, and the upper cover 20 is detachably arranged on the housing 10. With the above arrangement, in a normal operation, the upper cover 20 is able to cover the maintenance opening 12, which prevents foreign materials from coming into the accommodation chamber 11 and prevents the operators from being harmed due to an unintended cell touch. When the cells are damaged and need to be repaired, the operators can detach the upper cover 20 and repair the structures, such as electrode plates of the cells or communication wires between the cells, through the maintenance opening 12. With such arrangement, the liquid-cooling PACK and the cell module can have maintainability, which facilitates the repairing of the liquid-cooling PACK and the cell module and thus increases a service life of the liquid-cooling PACK and the cell module and reduces the unnecessary waste.

The maintenance opening 12 is arranged to correspond to welding spots of the cells. Specially, the maintenance opening 12 is arranged to correspond to welding spots, such as pole welding spots and fpc welding spots, of the cells. With such arrangement, it is convenient for the operators to deal with the malfunction since the cells usually malfunction at the welding spots, which further improves the maintenance efficiency of the operators.

A reinforcing structure 23 is provided on the upper cover 20. With such arrangement, the strength of the upper cover 20 can be improved, which avoids the upper cover 20 being damaged during its detaching process and thus increases the service life of the upper cover 20.

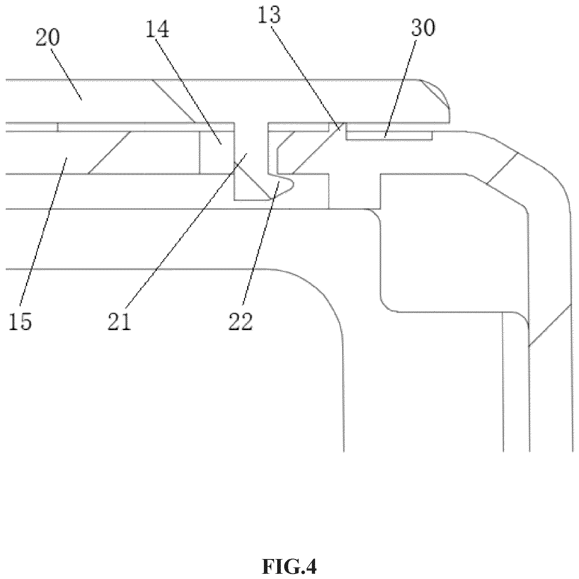

As shown in FIG.4, a sealant 30 is provided between the housing 10 and the upper cover 20 for forming sealing between the housing 10 and the upper cover 20. With such arrangement, it can prevent an external air from being introduced into the accommodation chamber 11 through a gap between the upper cover 20 and the housing 10, which ensures the sealing between the housing 10 and the upper cover 20. When the upper cover 20 is detached, the sealant 30 can be scraped by a tool.

In addition, a protruding limiter 13 is provided at the top of the housing 10, and the bottom surface of the upper cover 20 abuts against the protruding limiter 13. The sealant 30 is provided between the housing 10 and the upper cover 20. With such arrangement, the upper cover 20 can be supported by the protruding limiter 13, which avoids the sealing effect to be influenced by the upper cover 20 due to a compressing against the sealant 30 and ensures the sealant 30 to have a sufficient thickness. Meanwhile, a disassembling space can be reserved for the operators, which facilitates the operators scraping the sealant 30 when detaching the upper cover 20 and thus avoids the upper cover 20 and the housing 10 being scratched during disassembling.

Specially, a first bonding surface is provided at the top of the housing 10 and is circularly arranged at the periphery of the protruding limiter 13. A second bonding surface is provided at a bottom surface of the upper cover 20 and is circularly arranged along the edge of the upper cover 20. The first bonding surface and the second bonding surface are correspondingly arranged, and the sealant 30 is provided between the first bonding surface and the second bonding surface. With such arrangement, the sealant 30 can be easily provided between the housing 10 and the upper cover 20.

The sealant 30 may also fix the housing 10 with the upper cover 20.

Further, a buckle structure is provided between the housing 10 and the upper cover 20, and the housing 10 is detachably connected to the upper cover 20 by the buckle structure. With such arrangement, disassembling the housing 10 and the upper cover 20 is simple, the structure is simplified, and a structure, such as, a threaded hole, between the housing 10 and the upper cover 20 is avoided. In an embodiment, a buckle, the protruding limiter 13 and the sealant 30 are arranged in sequence in an outward direction from the center of the upper cover 20. With such arrangement, the upper cover 20 can be easily fixed on the housing 10.

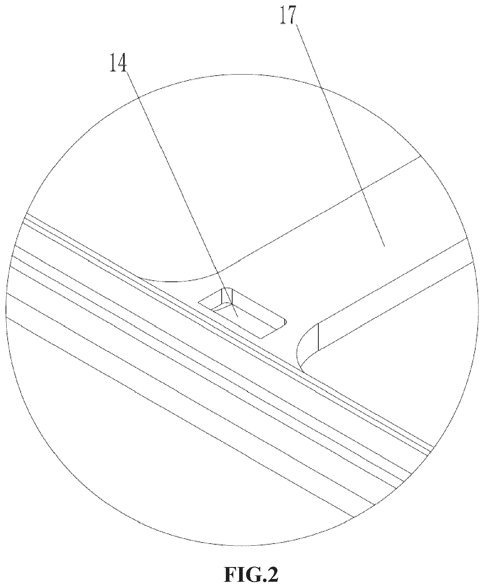

Referring to FIG.2, a through hole 14 is formed at the top of the housing 10, and a connecting rod 21 is provided on the upper cover 20. A protrusion 22 is provided at one end of the connecting rod 21 away from the upper cover 20. When the upper cover 20 is fixed to the housing 10, the connecting rod 21 passes through the through hole 14, and the protrusion 22 abuts against an inner wall of the top of the housing 10. The buckle structure is formed by cooperation of the through hole 14 and the connecting rod 21. With such arrangement, the structure is simple and the operation is easy, which facilitates the assembly and disassembly of the upper cover 20.

Specially, the through hole 14 has a structural dimension greater than that of the connecting rod 21. In case that the upper cover 20 is fixed to the housing 10, the connecting rod 21 is elastically deformed. With such arrangement, the through hole 14 has a sufficient space to accommodate the deformed connecting rod 21, which ensures the protrusion 22 to abut against the inner wall of the top of the housing 10 smoothly.

Further, a first inclined surface is provided at the bottom of the protrusion 22. The first inclined surface is gradually approached a center line of the connecting rod 21 in a direction away from the upper cover 20. A second inclined surface is provided on an inner wall of the through hole 14, and the second inclined surface is gradually away from a center line of the through hole 14. The first inclined surface and the second inclined surface are arranged correspondingly. With such arrangement, a guide structure is formed by cooperation of the first and second inclined surfaces, which facilitates the connecting rod 21 passing through the through hole 14.

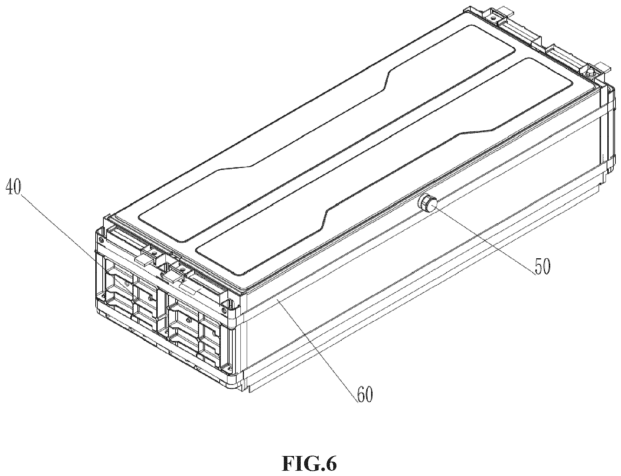

Referring to FIG.6, the case further includes two end covers 40, which are arranged at both ends of the housing 10, respectively. The two end covers 40 are fixedly connected to the housing 10. With such arrangement, it facilitates the assembly of the case, the two end covers 40 and the cells, and the operation is easy.

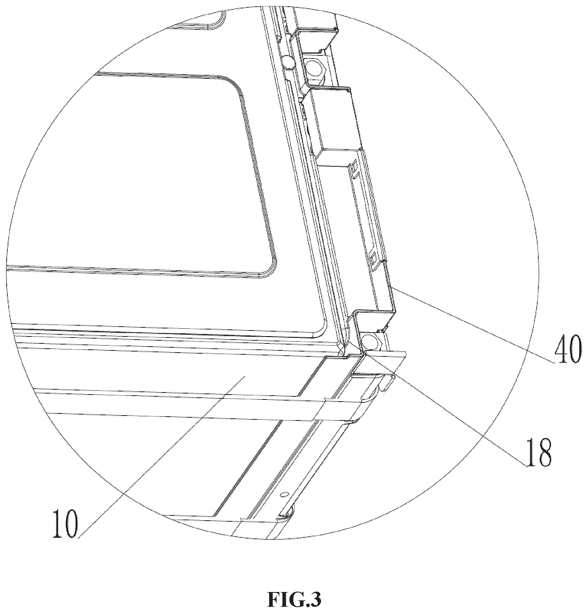

Referring to FIG.3, a potting groove 18 is formed between the ends of the housing 10 and the two end covers 40, and a potting adhesive is potted into the potting groove 18. The housing 10 is bonded to the end covers 40 by the potting adhesive. With such arrangement, the structure is simple, and the operation is easy, the fixation between the housing 10 and the end covers 40 is facilitated and machining a structure, such as, a threaded hole, is avoided. In addition, in case that the liquid-cooling PACK or the cell module is damaged due to high temperature, the potting adhesive is melted by the heat, and thus the gas inside the housing 10 can be discharged through a gap between the end covers 40 and the housing 10, so as to realize a pressures-relief and an explosion-proof effect.

Further, the potting groove 18 is provided at the top and both sides of the housing 10. With such arrangement, a sufficient sealing area between the housing 10 and the end covers 40 is ensured and a stable connection between the housing 10 and the end covers 40 is ensured.

In the conventional technology, a sealing ring is generally provided between the case cover and the case body. In contrast, in the present application, the sealing ring is not needed, which reduces the number of the parts and is more easier for the assembly.

An airtight detection structure 50 is provided on the housing 10 or the upper cover 20, or on both the housing 10 and the upper cover 20. In the present application, the airtight detection structure 50 is provided on the housing 10. The airtight detection structure 50 can not only detect air tightness of the accommodation chamber 11 and avoid air flowing, but also implement a function of pressure-relief. The airtight detection structure 50 may be a self-sealing valve or a relief valve.

Specially, the housing 10 includes a top plate 15 and two side plates 16, the two side plates 16 are provided on both sides of the top plate 15, respectively, and multiple maintenance openings 12 are formed in the top plate 15. Multiple buckle structures are provided between the top plate 15 and the upper cover 20. With such arrangement, repairing the cells is facilitated and a stable connection between the top plate 15 and the upper cover 20 is ensured. The position where the connecting rod 21 is arranged can be selected according to requirements. Optionally, the connecting rod 21 may be arranged at edges of the upper cover 20 or arranged at a central area of the upper cover 20.

Further, multiple reinforcing ribs 17 are provided on the top plate 15, and the spaces between the adjacent reinforcing ribs 17 are formed as the maintenance openings 12. With such arrangement, it can keep clear for electrode plates-welding, communication wires and a welding point for a temperature sensing wire while meets the requirement for reinforcing, which facilitates of repairing the cells. In addition, the through hole 14 is formed on the reinforcing ribs 17. In the present application, multiple maintenance openings 12 are arranged in the shape of mesh.

The housing 10 can be used for the cell module or for the whole PACK.

Further, the case further includes a pre-tighten structure 60, which can be a steel strip. In the present application, the housing 10 is not provided with a bottom plate. When the cell module is assembled, multiple cells and two end covers 40 are firstly fixed by the pre-tighten structure 60 and the two end covers 40 are arranged at both sides of the multiple cells, respectively. Then, the housing 10 is inserted between the pre-tighten structure 60 and the cells. With such arrangement, the assembling of the cell module is facilitated, and thus the operation is easy.

A cell module is provided in the present application. The cell module includes cells, a liquid-cooling plate, and the case described above. The cells are arranged inside the case, and the case is fixed to the liquid-cooling plate. Specially, the case is fixed to the liquid-cooling plate by a fixing glue. When the cell module is required to move, it only needs to move the liquid-cooling plate. The case may also be fixed on a tray of a heat sink, and the cell module can be dissipated by the heat-dissipation structure. The cell module can be used as one single PACK. The conventional PACK structure has a dimension greater than that of the cell module structure of the present application, and the conventional PACK structure implements pressure-relieving with a relief valve. The relief valve used in the conventional PACK has a greater specification than that of the relief valve used in the present application. In addition, the cell module of the present application can be provided with a self-sealing valve for air tightness detection. Therefore, the cost of the cell module of the present application is lower than that of the conventional PACK. The cell modules of the present application may be directly grouped to constitute an energy-storage system, or the cell modules may firstly constitute the PACK and then the obtained PACKs are grouped to constitute the energy-storage system. In addition, for the cell module with the case described above, repairing the cell module is facilitated, which increases the service life of the cell module and reduces the unnecessary waste.

It should be noted that the terms used in the context are only for description to the embodiments and do not intend to limit the embodiments according to the present application. As used herein, the singular form may also intend to include the plural form, unless the context clearly indicates exceptions. In addition, it should be understood that when the terms "including" and/or "comprising" are used in the context, they indicate the presence of features, steps, operations, devices, components, and/or their combinations.

Unless otherwise specified, the relative arrangement, numeric expressions, and numerical values of the components and steps described in these embodiments do not limit the scope of the present application. Meanwhile, it should be understood that, for sake of description, the dimensions of each part shown in the accompany drawings are not drawn according to the actual proportional relationship. The technology, method, and equipment known for those skilled in the relevant field may not be discussed in detail, but in appropriate cases, such technology, method, and equipment should be considered as a part of the granted Specification. In all the examples shown and discussed in the context, any specific value should be merely interpreted to be illustrative rather than a limitation. Therefore, other examples of exemplary embodiments may have different values. It should be noted that similar numeral references and letters represent similar technical features in the accompany drawings, and thus once a feature is defined in one figure, it does not need to be further discussed in subsequent figures.

In the description of the present application, it should be understood that the orientation or position relationships indicated by directional words such as "front, back, up, down, left, right", " transverse, vertical, perpendicular, horizontal", and "top, bottom" are usually based on the orientation or position relationships shown in the accompany drawings, which are only for sake of description to the present application and simplifying the description. Unless otherwise specified, these directional words do not indicate or imply that the referred device or component must have a specific orientation or be constructed and operated in a specific orientation, and therefore cannot be understood as a limitation to the scope of the present application. The directional words "inner, outer" refer to the inner and outer of the contour relative to each component itself.

For sake of description, spatial relative terms such as "on", "above", "on the upper surface", "upper", etc. can be used in the context to describe the spatial positional relationship between a device or feature as shown in the figure and another device or feature. It should be understood that the term spatial relative is intended to comprise different orientations in use or operation except those described in the figures for the device. For example, if a device in the drawings is inversely arranged, this device described as "above other devices or structures" or "below other devices or structures" will be positioned as "below other devices or structures" or "above other devices or structures". Therefore, the exemplary term "above" can include two orientations: "above" and "below". This device can also be positioned in different ways (rotated in 90 degrees or in other orientations), and the spatial relative description used herein is explained accordingly.

In addition, it should be noted that the words such as "first" and "second" are used to define components, which is only for the purpose of distinguishing the corresponding components. Unless otherwise stated, the above words do not have special meanings and cannot be understood as limiting the scope of the present application.

The description above is only preferred embodiments of the present application and is not intended to limit the present application. For those skilled in the art, the present application may have modifications and variations. Any modification, equivalent and improvement, etc. made according to the spirit and principle of the present application shall be included within the scope of the present application.

## Claims

1. A case for storing cells, comprising:
a housing (10), wherein the housing (10) is provided with an accommodation chamber (11), a maintenance opening (12) is formed at a top of the housing (10), and the maintenance opening (12) is in communication with the accommodation chamber (11), and the accommodation chamber (11) is configured to accommodate the cells, and the maintenance opening (12) is arranged corresponding to the cells; and
an upper cover (20), which is detachably arranged on the housing (10) and is configured to cover the maintenance opening (12).

2. The case according to claim 1, wherein a sealant (30) is provided between the housing (10) and the upper cover (20) for forming sealing between the housing (10) and the upper cover (20).

3. The case according to claim 2, wherein a protruding limiter (13) is provided at a top of the housing (10), a bottom surface of the upper cover (20) abuts against the protruding limiter (13), and the sealant (30) is provided between the housing (10) and the upper cover (20).

4. The case according to claim 1, wherein a buckle structure is provided between the housing (10) and the upper cover (20), and the housing (10) is detachably connected to the upper cover (20) by the buckle structure.

5. The case according to claim 4, wherein a through hole (14) is formed at the top of the housing (10), a connecting rod (21) is provided on the upper cover (20), a protrusion (22) is provided at one end of the connecting rod (21) away from the upper cover (20),
when the upper cover (20) is fixed to the housing (10), the connecting rod (21) passes through the through hole (14), and the protrusion (22) abuts against an inner wall of the top of the housing (10), and the buckle structure is formed by cooperation of the through hole (14) and the connecting rod (21).

6. The case according to claim 1, wherein the case further comprises two end covers (40), which are arranged at both ends of the housing (10), respectively, and the two end covers (40) are fixedly connected to the housing (10).

7. The case according to claim 6, wherein a potting groove (18) is formed between the ends of the housing (10) and the two end covers (40), a potting adhesive is potted into the potting groove (18), and the housing (10) is bonded to the two end covers (40) by the potting adhesive.

8. The case according to claim 1, wherein an airtight detection structure (50) is provided on the housing (10) and/or on the upper cover (20).

9. The case according to claim 4, wherein the housing (10) comprises a top plate (15) and two side plates (16), the two side plates (16) are arranged on both sides of the top plate (15), respectively, wherein a plurality of maintenance openings (12) are formed on the top plate (15), and a plurality of buckle structures are arranged between the top plate (15) and the upper cover (20).

10. The case according to claim 1, wherein the maintenance opening (12) is arranged to correspond to welding spots of the cells.

11. A cell module, comprising cells, a liquid-cooling plate, and the case according to any one of claims 1 to 1 0, wherein the cells are arranged inside the case, and the case is fixed to the liquid-cooling plate.
